# EUROPEAN PATENT SPECIFICATION

(11) **EP 0 453 315 B1**
(45) Date of publication and mention of the grant of the patent: **12.07.1995**
(21) Application number: 91303552.3
(22) Date of filing: 19.04.1991
(51) Int. Cl.: F16J 15/32

(54) **Brush seals**
Bürstendichtungen
Joints à brosses

(30) Priority: 20.04.1990 GB 9008917
(43) Date of publication of application: 23.10.1991
(73) Proprietor: CROSS MANUFACTURING COMPANY (1938) LIMITED, Combe Down, Bath, Avon BA2 5RR (GB)
(72) Inventor: Flower, Ralph Franklyn John, Devizes, Wiltshire SN10 1QE (GB)
(74) Representative: Gillam, Francis Cyril

(56) References cited:
- GB-A- 1 598 926
- GB-A- 2 076 935
- GB-A- 2 198 195

## Description

This invention relates to a brush seal suitable for effecting a seal between a rotatable shaft and a housing having a bore through which that shaft extends. In particular, this invention concerns such a brush seal and which has a base portion for mounting on one of the shaft and housing, a plurality of bristles projecting from the base portion to wipe against a surface of the other of the shaft and housing, and a backing plate projecting from the base portion part-way towards the tips of the bristles and being disposed to support the bristles against flexing towards the backing plate in a direction generally parallel to the shaft axis.

A brush seal and a brush seal assembly according to the preambles of claims 1 and 9 is known for instance from US-A-4 202 554.

It is frequently necessary to effect a fluid-tight seal between a rotatable shaft and a housing having a bore through which the shaft extends. There are innumerable designs of such seals and a machine designer has to select the most appropriate type of seal, having regard to the operating conditions.

In the case of a shaft which rotates at a relatively high speed and in the presence of pressurised hot gases, such as is encountered in the case of a gas turbine or a jet engine, various designs of brush seal have been developed on account of the unsatisfactory performance of simpler seals having for example a synthetic elastomeric annular sealing member clamped to the housing and bearing on the shaft. For example, as described in US-A-4202554 a brush seal having a plurality of fine bristles which are held in a carrier mounted on the housing such that the tips of the bristles wipe against the shaft so as to effect a seal thereagainst. The bristles may for instance be of bronze, a chrome-nickel alloy or other alloy wire.

When a brush seal as described above is required to withstand a considerable pressure difference thereacross, there is a tendency for the bristles to flex towards the lower pressure side of the seal. Any such flexing of the bristles in the axial direction in effect reduces the effective radial length of the bristles, and so the tips of the bristles may lift clear of the shaft and so spoil the sealing action.

In an attempt to minimise the above difficulty occurring when there is a significant pressure difference across the seal, it is known to construct a brush seal with a backing plate arranged to lie in a radial plane on the low pressure side of the seal and to extend part-way towards the tips of the bristles from the base portion thereof. The backing plate may then support the bristles to minimise the likelihood of the flexing thereof in the axial direction. However, it is not possible to reduce the clearance between the inner diameter of the bristle backing plate and the shaft to a very small value, for the seal would then be unable to accommodate changes in the seal, shaft and housing dimensions, caused by thermal and dynamic stresses. Since contact between the backing plate and the shaft would cause a rapid and catastrophic failure of at least the seal assembly, the clearance must be relatively large to ensure there is no possibility of such contact.

It is a principal object of the present invention to provide a brush seal suitable for use between a housing and a shaft to effect a seal therebetween even should the seal be subjected to a relatively high pressure difference thereacross, and possibly also to high temperatures.

In view of the foregoing, this invention provides a brush seal of the kind described which is characterised by the provision of an abradable material on the backing plate and projecting towards the tips of the bristles from the edge of the backing plate adjacent said tips, which abradable material is disposed to support the tip portions of the bristles and serves to maintain clearance between the backing plate and said surface at a minimum.

In the following description of this invention, reference will be made solely to a kind of brush seal intended for mounting in a bore of a housing with the tips of the bristles wiping against a shaft. However, the invention is equally applicable to a seal intended for mounting on a shaft with the tips of the bristles wiping against a suitable surface of the housing, and the references to 'shaft' and 'housing' in the following description should be understood to refer to either kind of seal, inverting those terms as appropriate.

It will be appreciated that by providing an abradable material on the backing plate of a seal of this invention, to support the tip portions of the bristles, an enhanced sealing effect may be obtained because the clearance between the abradable material and the shaft may be significantly less than the minimum clearance which may safely be provided between the backing plate and the shaft, so reducing the gap which must be sealed. Also, there is more support for the tip portions of the bristles, so reducing the flexing thereof and thus enhancing the sealing effect. If, during operation of the seal, the stresses cause the abradable material and shaft to contact one another, the selected abradable material will rapidly wear away without damage to the assembly until there is essentially no clearance between the shaft and that material; on subsequent removal of the stress, there will then be the minimum possible clearance between the abradable material and the shaft for safe operation. Such abrasion of the abradable material, on contacting the shaft, will prevent the catastrophic failure of the seal, so that reliable operation may still be achieved.

The abradable material preferably is a low-friction material, such as of 85% nickel, 15% graphite. This may be formed into an annulus of apropriate dimensions, and then affixed to the backing plate. In the alternative, the abradable material may be applied to the backing plate in the form of a coating which is then finished to the required dimensions.

In order to minimise the area of contact with the shaft in the event that the abradable material and shaft should contact each other, it is preferred for the face of the abradable material nearest the tips of the bristles to have a reduced cross-section in the axial direction, as compared with the cross-section of the backing plate. This may be achieved by giving the abradable material a tapering profile, in which case the end portion of the backing plate nearer the tips of the bristles may also have a corresponding tapering profile, to match that of the abradable material. As an alternative, the end portion of the backing plate nearer the tips of the bristles may have a profile of reducing cross-section, the abradable material having a constant cross-section matching that at the end of the backing plate, to which it is attached. Another possibility is for the backing plate to have several lands, for example at its end portion nearer the tips of the bristles, so as to provide two arms extending generally radially, the ends of each of these two arms being provided with abradable material - but in this case, the abradable material remote from the bristle tips will not serve to support the bristle tips.

A preferred construction for a brush seal of this invention is for the bristles to be located between an annular base plate and the backing plate, the assembly of the base plate, bristles and backing plate being joined together in a suitable manner, for example, by welding, brazing or even by means of an adhesive if the seal is intended for use in a low-temperature application. To enhance the sealing effect, two or even more such seals may be arranged co-axially side by side, for example by welding the backing plate of one seal to the base plate of the next adjacent seal. As an alternative, the seals may be clamped together within a metal case, of suitable profile.

When a brush seal is employed, it is usual to provide on the surface of the shaft wiped by the tips of the bristles a rubbing surface matched to the material of the bristles of the brush seal. For example, such a rubbing surface could comprise a coating of aluminium oxide or of chrome carbide. Such a rubbing surface may serve to minimise any wear on the shaft, in the event that contact takes place between the shaft and the abradable material.

By way of example only, certain specific embodiments of brush seal of this invention will now be described in detail, reference being made to the accompanying drawings, in which:-
Figure 1 is a diagrammatic cross-section through a first embodiment of brush seal of this invention, in conjunction with a shaft against which the seal is effected;
Figure 2 is a cross-sectional view through a second embodiment of brush seal of this invention;
Figures 3 and 4 are views similar to that of Figure 2, but of third and fourth embodiments respectively of brush seals; and
Figures 5 and 6 show two alternative embodiments of multiple brush seal of this invention.

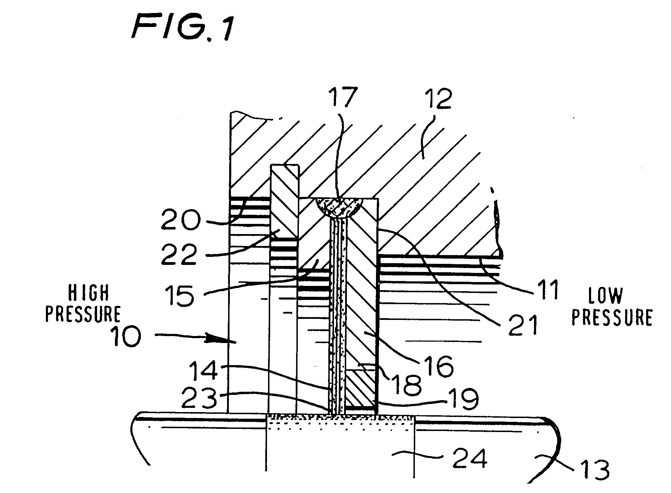

Referring initially to Figure 1, there is shown a brush seal 10 of this invention, mounted within a bore 11 formed in a housing 12, through which bore a shaft 13 extends and against which a seal is to be effected. The brush seal 10 comprises a plurality of bristles 14 which extend generally radially inwardly from a side face of an annular base plate 15, there being an annular backing plate 16 arranged co-axially in a parallel manner to the base plate 15, with the bristles 14 lying between the plates 15 and 16. The assembly of bristles 14 and plates 15 and 16 is held together by an annular weld bead 17, extending around the seal.

The radially inner surface 18 of the backing plate 16 has an annulus 19 of an abradable material attached thereto, such that the annulus 19 is generally contiguous with the backing plate 16 to project radially inwardly towards the shaft 13. The annulus 19 of abradable material is of a composition of typically 85% nickel, 15% graphite, and is attached to the backing plate 16 for example by means of an adhesive.

The brush seal 10 is located in a counter-bore 20 provided in bore 11, and is held against a shoulder 21 in the bore 11 by means of a circlip 22, so as to be co-axial with the shaft 13.

The brush seal 10 is machined to very close tolerances, so that when the seal is located in the housing 12, the tips 23 of the bristles 14 just wipe the cylindrical surface of the shaft 13. To minimise friction between the tips of the bristles and the shaft, a rubbing surface 24 is provided on the shaft, which surface 24 may for example comprise a coating of aluminium oxide or of chrome carbide.

The abradable material 19 is also finished to define an inner diameter very slightly larger than the diameter of the shaft 13, so that there is essentially a minimum clearance between the abradable material and the shaft, when the seal is assembled in the housing. If then during operation of the seal, the thermal and dynamic stresses cause the abradable material 19 to contact the shaft 13, the abradable material will wear away to an extent sufficient to permit the shaft to continue rotating, without damage occurring to the shaft or the seal itself, apart from the abradable material. In this way, the clearance between the abradable material and the shaft may be maintained at an absolute minimum, and so the gap which requires sealing by the bristles also will be very small.

If the seal is put in service with a relatively high pressure difference across the bristles, there is a tendency for the bristles to flex in a direction generally parallel to the shaft axis, towards the low pressure side of the seal. By having the backing plate extending towards the shaft and the abradable material projecting further, almost to the cylindrical surface of the shaft, the possibility of the bristles flexing in this way is reduced to an absolute minimum, so that a good sealing effect may still be maintained.

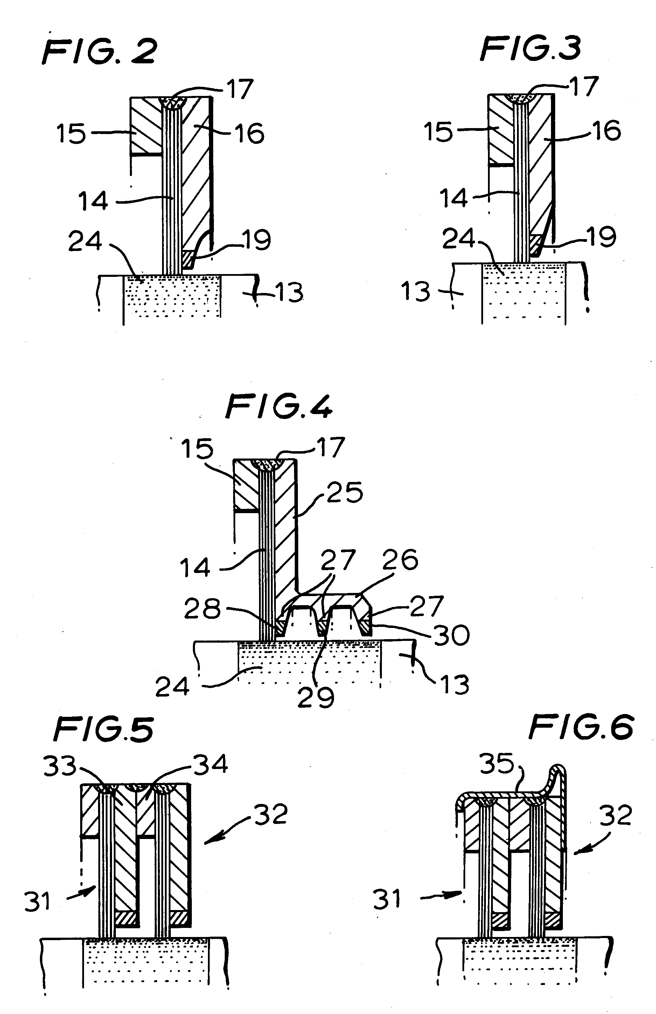

Figure 2 shows an alternative arrangement of seal of this invention, where the abradable material 19 is of a reduced axial thickness. The axial thickness of the backing plate 16 is also reduced in the region of the abradable material, such that there is a smooth transition between the backing plate 16 and the abradable material 19. In all other respects the arrangement of Figure 2 is the same as that of Figure 1, and like parts are given like reference characters: those parts will not be described again here.

Figure 3 shows a further alternative form of brush seal of this invention aiming at achieving the same effect as that illustrated in Figure 2, but by having a tapering portion at the radially inner end of the backing plate 16, blending smoothly with a tapering abradable material 19.

Figure 4 shows yet another brush seal, this time having its backing plate 25 extended at 26 to provide additional sealing lands 27 projecting radially towards the shaft. Any reasonable number of such lands 24 could be incorporated in the backing plate. The radially inner surfaces of these lands 27 should be coated with suitable abradable material 28, 29 and 30, so that the radially inner surfaces lie closely adjacent the cylindrical surface of the shaft. The abradable material 28 on the land nearest the bristles 14 may serve to support those bristles, whereas the abradable material 29 and 30 on the other lands merely serves to assist the sealing action against the shaft. Figures 5 and 6 show two alternative forms of multiple seals, wherein essentially similar brush seals of this invention are joined together co-axially to lie side-by-side in a generally parallel relationship, in order to obtain a better sealing effect. In Figure 5, the two seals 31 and 32 are welded together with the backing plate 33 of one seal 31 in contact with the base plate 34 of the second seal 32, whereas in the arrangement of Figure 6, a circular metallic clip 35 is employed to clamp the two seals together.

In all of the above embodiments of seal of this invention, enhanced sealing effects may be obtained by having the clearance between the backing plate and the shaft reduced to a minimum by the provision of the abradable material 19. This serves to support the tips of the bristles and also minimises the gap between the backing plate and the shaft, which requires sealing.

## Claims

1. A brush seal for effecting a seal between a shaft (13) and a housing (12) having a bore (11) through which the shaft extends, which seal comprises a base portion (15) for mounting on one of said shaft and said housing, a plurality of bristles (14) projecting from the base portion and having tip portions (23) for wiping against a surface (24) of the other of said shaft and said housing, and a backing plate (16) projecting from the base portion part-way towards said tip portions of the bristles, which backing plate is disposed to support the bristles against flexing towards the backing plate in a direction generally parallel to the shaft axis, characterised in that an abradable material (19) is provided on the backing plate (16) which abradable material projects towards the said tip portions (23) of the bristles (14) from the edge of the backing plate adjacent said tip portions, which abradable material (19) is disposed to support said tip portions (23) of the bristles and serves to maintain clearance between the backing plate (16) and said surface (24) at a minimum.

2. A brush seal according to claim 1, characterised in that said abradable material (19) comprises a low-friction nickel-graphite alloy.

3. A brush seal according to claim 1 or claim 2, characterised in that said abradable material (19) has a cylindrical face nearest the tip portions of the bristles, the width of said face in the axial direction having a lesser dimension than the cross-sectional thickness of said backing plate (Figures 2 or 3).

4. A brush seal according to claim 3, characterised in that said abradable material (19) has a tapering profile, in the radial direction.

5. A brush seal according to claim 4, characterised in that the cross-sectional thickness of said backing plate (16) tapers in a corresponding manner to the taper of the abradable material (19).

6. A brush seal according to claim 1, characterised in that said backing plate (16) has at least two axially spaced arms (27) extending generally radially, one of said arms being arranged to support the tip portions of the bristles, (14) and the ends of each arm being provided with said abradable material (28,29,30).

7. A brush seal according to any of the preceding claims, wherein the base portion (15) is in the form of an annular plate, the backing plate (16) also is annular and has a greater radial extent than that of said base plate, and the plurality of bristles (14) are mounted between the base plate (15) and the backing plate (16), with the bristle tip portions projecting beyond the backing plate.

8. A brush seal assembly comprising at least two brush seals each of which accords to any of one of claims 1 to 7 and arranged co-axially side-by-side.

9. A brush seal assembly comprising a housing (12) defining a bore (11), a shaft (13) rotatably mounted within the housing (12) and extending through the bore, a brush seal element (10) mounted on the housing to surround the shaft and effect a seal between the shaft and the housing, which said brush seal element comprises:
- an annular base portion (15);
- a plurality of bristles (14) projecting from the base portion and having tip portions (23) remote from said base portion which tip portions wipe against a circumferential surface of said shaft;
- an annular backing plate (16) projecting from the base portion towards said bristle tip portions (23) and disposed to support the bristles against flexing in the axial direction towards said plate;
characterised in that the backing plate (16) is provided with an abradable material disposed on the face thereof nearest said shaft (13) and disposed to support said bristle tip portions, the abradable material serving to maintain clearance between the backing plate (16) and the shaft (13) at a minimum, and in that said circumferential shaft surface is provided with a rubbing surface (24) for said bristle tip portions.

10. A brush seal assembly according to claim 9, in which said shaft rubbing surface (24) comprises a coating of aluminium oxide or of chromium carbide.

## Patentansprüche

1. Bürstendichtung zum Bewirken einer Dichtung zwischen einer Welle (13) und einem Gehäuse (12) mit einer Bohrung (11), durch welche sich die Welle erstreckt, wobei die Dichtung einen Basisabschnitt (15) zur Anbringung an der Welle oder am Gehäuse, eine Anzahl von Borsten (14), die vom Basisabschnitt vorstehen und Endbereiche (23) haben, die entsprechend an einer Oberfläche (24) des Gehäuses oder der Welle anliegen, und eine Verstärkungsplatte (16) aufweist, die vom Basisabschnitt bis nahe an die Endbereiche der Borsten vorsteht, wobei die Verstärkungsplatte dazu ausgestaltet ist, die Borsten gegen ein Durchbiegen auf die Verstärkungsplatte in eine im allgemeinen parallel zur Wellenachse verlaufende Richtung abzustützen, **dadurch gekennzeichnet,** daß an der Verstärkungsplatte (16) ein abtragbares Material (19) vorgesehen ist, wobei das abtragbare Material von der den Endbereichen (23) der Borsten (14) benachbarten Kante der Verstärkungsplatte in Richtung auf die Endbereiche vorsteht, wobei das abtragbare Material (19) vorgesehen ist, um die Endbereiche (23) der Borsten abzustützen, und dazu dient, den Abstand zwischen der Verstärkungsplatte (16) und der Oberfläche (24) bei einem Minimum zu halten.

2. Bürstendichtung nach Anspruch 1, **dadurch gekennzeichnet,** daß das abtragbare Material (19) eine Nickel-Graphit-Legierung mit geringer Reibfestigkeit aufweist.

3. Bürstendichtung nach Anspruch 1 oder Anspruch 2, **dadurch gekennzeichnet,** daß das am nächsten zu den Endbereichen der Borsten gelegene abtragbare Material (19) eine zylinderförmige Oberfläche aufweist, wobei die Breite dieser Oberfläche in axialer Richtung eine geringere Abmessung hat als die Querschnittsbreite der Verstärkungsplatte (Figur 2 oder 3).

4. Bürstendichtung nach Anspruch 3, **dadurch gekennzeichnet,** daß das abtragbare Material (19) ein sich in radialer Richtung verjüngendes Profil hat.

5. Bürstendichtung nach Anspruch 4, **dadurch gekennzeichnet,** daß sich die Querschnittsbreite der Verstärkungsplatte (16) entsprechend der Verjüngung des abtragbaren Materials (19) verjüngt.

6. Bürstendichtung nach Anspruch 1, **dadurch gekennzeichnet,** daß die Verstärkungsplatte (16) zumindest zwei axial beabstandet angeordnete Arme (27) aufweist, die sich im allgemeinen radial erstrecken, wobei einer der Arme dazu ausgelegt ist, die Endbereiche der Borsten (14) abzustützen, und wobei die Enden jedes Armes mit dem abtragbaren Material (28, 29, 30) versehen sind.

7. Bürstendichtung nach einem der vorhergehenden Ansprüche, wobei der Basisabschnitt (15) die Form einer ringförmigen Platte aufweist, wobei die Verstärkungsplatte (16) ebenfalls ringförmig ist und eine größere radiale Ausdehnung als die Basisplatte hat, und wobei die Anzahl von Borsten (14) zwischen der Basisplatte (15) und der Verstärkungsplatte (16) angeordnet ist, wobei die Endbereiche der Borsten bis unter die Verstärkungsplatte vorstehen.

8. Bürstendichtungsanordnung mit zumindest zwei Bürstendichtungen nach einem der Ansprüche 1 bis 7, die koaxial nebeneinander angeordnet sind.

9. Bürstendichtungsanordnung, mit einem Gehäuse (12), welches eine Bohrung (11) enthält, einer Welle (13), die drehbar im Gehäuse (12) gehalten ist und sich durch die Bohrung erstreckt, und einem Bürstendichtungselement (10), das am Gehäuse angebracht ist, um die Welle zu umgeben und um eine Dichtung zwischen der Welle und dem Gehäuse zu bewirken, wobei das Bürstendichtungselement aufweist:
- einen ringförmigen Basisabschnitt (15);
- eine Anzahl von Borsten (14), die vom Basisabschnitt vorstehen und Endbereiche (23) haben, die vom Basisabschnitt beabstandet sind, wobei die Endbereiche an einer Umfangsfläche der Welle anliegen;
- eine ringförmige Verstärkungsplatte (16), die vom Basisabschnitt in Richtung auf die Endbereiche (23) der Bürsten vorsteht und dazu ausgebildet ist, die Borsten gegen ein Durchbiegen in axialer Richtung auf die Platte abzustützen;
**dadurch gekennzeichnet,** daß die Verstärkungsplatte (16) mit einem abtragbaren Material versehen ist, das an deren am nächsten zur Welle (13) gelegenen Fläche angebracht und dazu ausgelegt ist, die Endbereiche der Borsten abzustützen, wobei das abtragbare Material dazu dient, den Abstand zwischen der Verstärkungsplatte (16) und der Welle (13) bei einem Minimum zu halten, und daß die Umfangsfläche der Welle mit einer Reibfläche (24) für die Endbereiche der Borsten versehen ist.

10. Bürstendichtungsanordnung nach Anspruch 9, wobei die Reibfläche (24) der Welle eine Schicht aus Aluminiumoxid oder Chromkarbid enthält.

## Revendications

1. Joint à brosse pour former une étanchéité entre deux organes, à savoir un arbre (13) et un boîtier (12) possédant un alésage (11) à travers lequel s'étend l'arbre, lequel joint comprend une partie formant embase (15) pour monter, sur l'un des deux organes précités, des poils (14) faisant saillie à partir de la partie formant embase et ayant des parties d'extrémité (23) pour balayer une surface (24) de l'autre des deux organes précités, et une plaque d'appui (16) faisant saillie à partir de la partie formant embase sur une partie de la distance vers les parties d'extrémité des poils, cette plaque d'appui étant disposée pour soutenir les poils à l'encontre de la flexion vers la plaque d'appui dans une direction généralement parallèle à l'axe de l'arbre, caractérisé en ce qu'un matériau susceptible d'abrasion (19) est prévu sur la plaque d'appui (16) et fait saillie vers les dites parties d'extrémité (23) des poils (14) à partir du bord de la plaque d'appui adjacent aux dites parties d'extrémité, ce matériau susceptible d'abrasion (19) étant disposé pour soutenir les parties d'extrémité (23) des poils et servant à maintenir le jeu entre la plaque d'appui (16) et la dite surface (24) à une valeur minimale.

2. Joint à brosse selon la revendication 1, caractérisé en ce que ledit matériau susceptible d'abrasion (19) comprend un alliage nickel-graphite à faible friction.

3. Joint à brosse selon la revendication 1 ou 2, caractérisé en ce que ledit matériau susceptible d'abrasion (19) a une face cylindrique qui est la plus proche desdites parties d'extrémité des poils, la largeur de cette face dans la direction axiale ayant une moindre dimension que l'épaisseur de la section transversale de la plaque d'appui (figures 2 ou 3).

4. Joint à brosse selon la revendication 3, caractérisé en ce que le matériau susceptible d'abrasion (19) a, dans la direction radiale, un profil qui se rétrécit progressivement.

5. Joint à brosse selon la revendication 4, caractérisé en ce que l'épaisseur de la section transversale de la plaque d'appui (16) diminue progressivement d'une manière qui correspond au rétrécissement du matériau susceptible d'abrasion (19).

6. Joint à brosse selon la revendication 1, caractérisé en ce que la plaque d'appui (16) possède au moins deux bras axialement espacés (27) s'étendant d'une manière générale radiale, l'un de ces bras étant agencé pour soutenir les parties d'extrémité des poils (14), les extrémités de chaque bras étant munies du matériau susceptible d'abrasion (28, 29, 30).

7. Joint à brosse selon l'une quelconque des revendications précédentes, dans lequel la partie formant embase (15) a la forme d'une plaque annulaire, la plaque d'appui (16) est également annulaire et a une plus grande étendue radiale que la plaque formant embase, et les poils (14) sont montés entre la plaque formant embase (15) et la plaque d'appui (16), les parties d'extrémité des poils faisant saillie au-delà de la plaque d'appui.

8. Ensemble à joint à brosse, comprenant au moins deux joints à brosse conformes chacun à l'une quelconque des revendications 1 à 7, et disposés coaxialement côte-à-côte.

9. Ensemble à joint à brosse comprenant un boîtier (12) définissant un alésage (11), un arbre (13) monté en rotation dans le boîtier (12) et s'étendant à travers l'alésage, un élément formant joint à brosse (10) monté sur le boîtier pour entourer l'arbre et former une étanchéité entre l'arbre et le boîtier, cet élément formant joint à brosse comprenant:
- une partie formant embase annulaire (15);
- des poils (14) faisant saillie à partir de la partie formant embase et ayant, à distance de la partie formant embase, des parties d'extrémité (23) qui balaient une surface circonférentielle de l'arbre;
- une plaque d'appui annulaire (16) faisant saillie à partir de la partie formant embase vers les parties d'extrémité (23) des poils et disposée pour soutenir les poils à l'encontre de la flexion dans la direction axiale vers la dite plaque;
caractérisé en ce que la plaque d'appui (16) est munie d'un matériau susceptible d'abrasion disposé sur la face de celle-ci la plus proche de l'arbre (13) et disposé pour soutenir les parties d'extrémité des poils, le matériau susceptible d'abrasion servant à maintenir à une valeur minimale le jeu entre la plaque d'appui (16) et l'arbre (13), et en ce que la surface circonférentielle de l'arbre est munie d'une surface de frottement (24) pour les parties d'extrémité des poils.

10. Ensemble formant joint à brosse selon la revendication 9, dans lequel la surface de frottement de l'arbre (24) comprend un revêtement en oxyde d'aluminium ou en carbure de chrome.
